# EUROPÄISCHE PATENTANMELDUNG

(11) **EP 4 718 346 A1**
(43) Veröffentlichungstag der Anmeldung: **01.04.2026**
(21) Anmeldenummer: 24000119.8
(22) Anmeldetag: 30.09.2024
(51) Int. Cl.: G06Q 10/04, A63C 11/00, G06Q 50/20, G09B 1/00, G06Q 10/0639, G06Q 50/00

(54) **INTELLIGENTES KI MODUL ZUR ECHTZEITANALYSE VON FAHRTECHNIK, BODENBESCHAFFENHEIT UND BESCHLEUNIGUNG**

(71) Anmelder: Drengwitz, Klaus, 77731 Willstätt-Sand (DE)
(72) Erfinder: Drengwitz, Klaus, 77731 Willstätt-Sand (DE)

(57) **Zusammenfassung**

Hochpräzise Bewegungsanalyse, Leistungsdiagnostik für Skifahrer, Abbildung biomechanischer Prozesse. Connection mit Freunden. Dies alles und noch viel mehr ist mit Embedded KI möglich.

Durch die Kombination der Sensoren IMU, DMS, GPS, und Mikrofon auf einer Platine mit Chip, sind bisher nicht dagewesene Messwerte erfassbar. Diese Kombination ist einzigartig ! Der Modul S + Kl wird direkt auf dem Ski / Snowboard oder Fahrrad befestigt. Es wird mit einem Sonnenkollektor oder Akku mit Strom versorgt werden.

Die zuvor ermittelten Messwerte für die Sensoren werden im Rahmen einer Big-Data Analyse durch den Einsatz intelligenter Algorithmen ausgewertet. Dabei kommen Methoden des maschinellen Lernens und der Mustererkennung zum Einsatz. Hierbei werden aus der Menge an Rohdaten Relevante Zusammenhänge, Trends und Abweichungen identifiziert. Die so extrahierten wesentlichen Informationen bilden die Grundlage für die embedded KI.

## Beschreibung

Intelligentes KI System zur Echtzeitanalyse von Fahrtechnik, Untergrundbeschaffenheit, GPS für Unfallmeldung und soziale Interaktion durch Vernetzung und Datenaustausch mit anderen Skifahrern und Verbesserung des Fahrstils. Das ganze verbaut in einem Modul , dass auf dem **Ski , Snowboard** und **Fahrrad** befestigt wird. Die komprimierten Messdaten werden auf einer kleinen Platine mit einem Chip incl. Sensoren integriert. Die Kommunikation findet ebenfalls über eine Handy APP statt, per Bluetooth, WLAN und NFC

### Es kommen folgende Sensoren zum Einsatz :

### IMU

Intertial Measurement Unit , bestehend aus Beschleunigungssensoren und Gyroskopen. Sie erfassen die Bewegungen, Beschleunigungen und Drehungen des Skifahrers. Dies dient der Verbesserung des Fahrstiles . Mit diesem Sensor kann auch ein Unfallhergang analysiert werden und ein Notruf über GPS abgesetzt werden.

### DMS

Dehnmesstreifen , die Verwindungen des Materials messen, je nach Belastung ( Sprung , Kurve , Körperverlagerung ). Dient ebenfalls der Verbesserung des Fahrstils.

### Mikrofon

Erkennt die Geräusche und Beschaffenheit des Untergrundes. Bei Schnee, Pulver oder Eis kann dadurch das richtige Wachs und der Kantenschliff beim Ski / Board verbessert werden ( Renntechnik ).

### Funfaktor

Mit den Sensoren ist es möglich ein Ranking für Freunde zu machen . Es können Anzahl der Kurven , Topspeed . gefahrene Strecke , kürzeste Pausen usw . aufgezeichnet werde.

### Nanotechnik /Zukunft

Durch einen Impuls der KI kann sich das Skimaterial verändern vom harten zum weichen Ski und sich so optimal den Schneebedingungen anpassen.

### Industriell Anwendbar

Der Ski und Snowboardmarkt ist nach wie vor ein interessanter Markt mit ca. 4 Milliarden Euro pro Jahr.

Die 3 größten Skihersteller Rossignol , Salomon und Atomic produzieren Jedes Jahr insgesamt 3 Millionen Paar Ski und 500.000 Snowboards.

Alle europäischen Hersteller bauen insgesamt 4.600.000 Paar Ski und 800.000 Snowboards.

Die KI Module bieten einen großen Funfaktor durch Ranking mit Freunden. Wer war der schnellste , wer hat die meisten Kurven gefahren , wer hat die meisten km gefahren....

Der Sicherheitsaspekt ist ebenfalls sehr hoch , da mittels GPS auf jedem Modul der Ski im Gelände gefunden werden kann. Bei Sturz gibt es ein Notrufsignal. Skidiebstahl ist ebenfalls erschwert , da der Ski / Board lokalisierbar ist.

Durch persönliche Recherche auf Messen mit ca. 400 Personen würden 92% das Produkt bei einem Preis von 120 € pro Skipaar kaufen. Bei Produktionskosten von 25 € pro Modul (Ski 2 Module , Board 1Modul) ist die Bruttomarge 70€ / Skipaar. Erreiche ich ein Prozent des Marktes ( 46.000 paar Ski) habe ich eine Bruttomarge von 3.220.000 €.

Dann kommen noch Snowboard und Fahrräder hinzu.

Desweiteren kommt noch der Markt der gebrauchten Ski , Boards und Fahrräder hinzu.

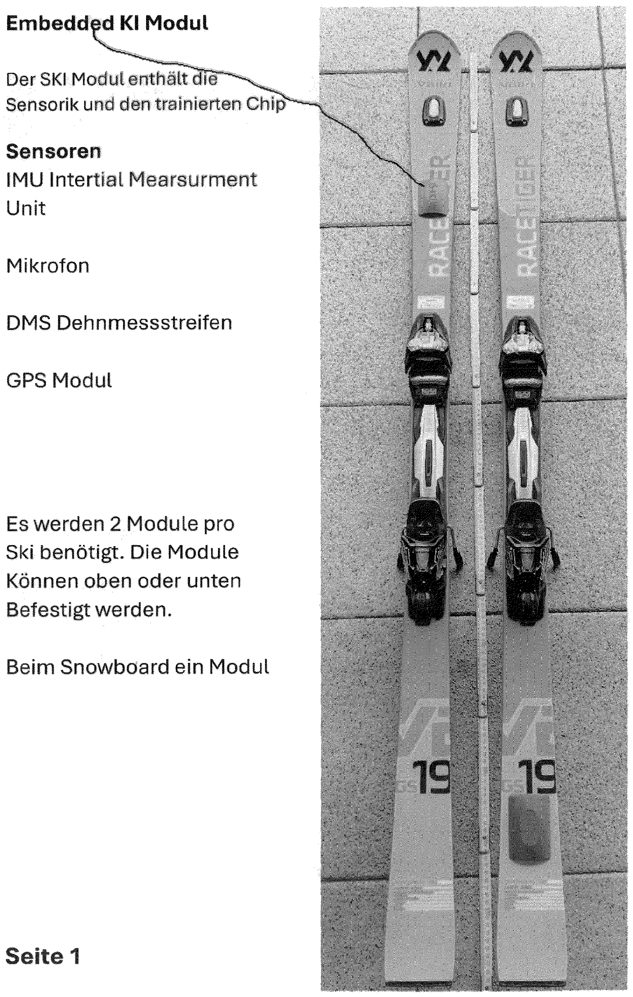

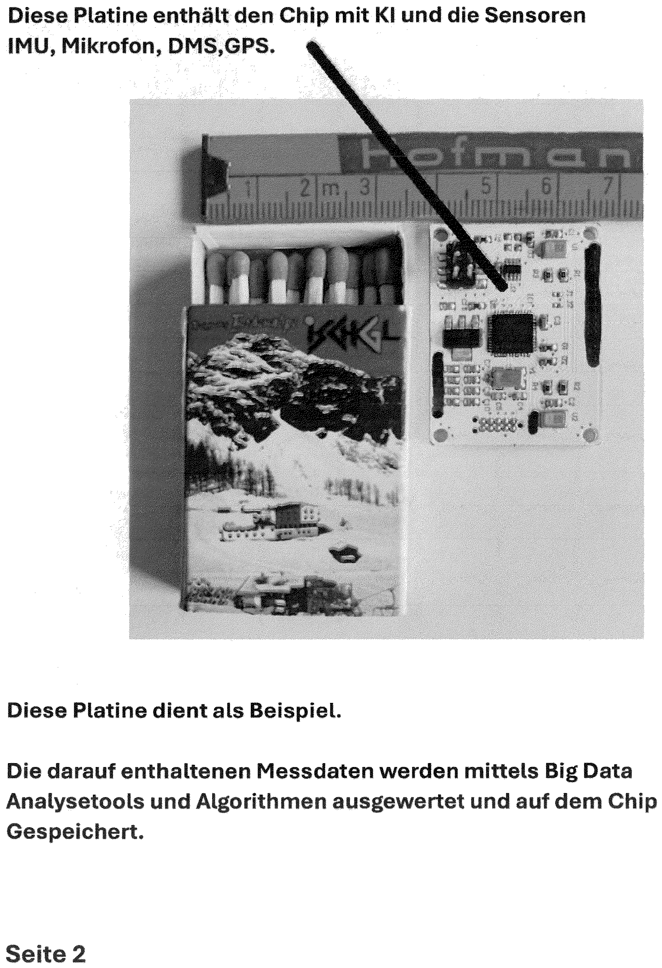

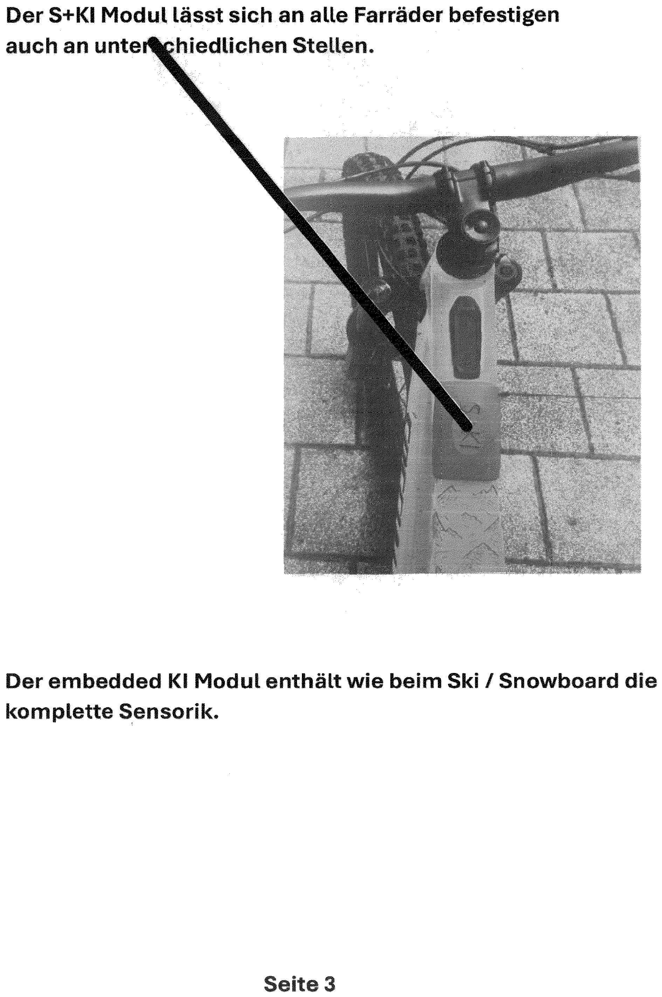

## Patentansprüche

1. Intelligentes KI-Modulzur Echtzeit-Analyse der Fahrtechnik, Bodenbeschaffenheit und Beschleunigung für Ski, Snowboard und Fahrräder, umfassend:
- ein Gehäuse zur Montage an einem Ski oder Fahrrad,
- eine integrierte Sensoreinheit, bestehend aus mindestens einer Inertial Measurement Unit (IMU), einem Dehnungsmessstreifen (DMS) und einem Mikrofon, die gemeinsam zur Erfassung von Bewegungs-, Positions- und Vibrationsdaten eingesetzt werden,
- eine künstliche Intelligenz (KI), die die durch die Sensoreinheit erfassten Daten in Echtzeit analysiert, um die Fahrtechnik des Benutzers, die Bodenbeschaffenheit und die Beschleunigung zu bewerten,
- eine Kommunikationsschnittstelle zur Übermittlung der analysierten Daten an eine externe Einheit, wie z.B. ein mobiles Endgerät oder eine zentrale Datenbank,
- eine Anwendungssoftware, die es ermöglicht, ein Ranking-System für mehrere Benutzer zu erstellen, basierend auf analysierten Fahrdaten wie Kurvengeschwindigkeit, gefahrene Strecke, kürzeste Pausen und weitere relevante Metriken.

2. Intelligentes KI-Modul nach Anspruch 1, wobei die KI so konfiguriert ist, dass sie sich kontinuierlich selbst trainiert und an unterschiedliche Fahrstile und Bodenbeschaffenheiten anpasst.

3. Intelligentes KI-Modul nach einem der vorhergehenden Ansprüche, wobei die erfassten Daten genutzt werden, um personalisierte Verbesserungsvorschläge und Echtzeit-Rückmeldungen an den Benutzer zu generieren.

4. Intelligentes KI-Modul nach einem der vorhergehenden Ansprüche, wobei die Kommunikationsschnittstelle eine drahtlose Datenübertragungstechnologie, wie Bluetooth oder WLAN, verwendet.

5. Intelligentes KI-Modul nach einem der vorhergehenden Ansprüche, wobei das Mikrofon zur Erkennung und Analyse von Umgebungsgeräuschen verwendet wird, um zusätzliche Informationen über die Bodenbeschaffenheit zu gewinnen.

6. Das KI Modul setzt einen Impuls ab auf das verwendete Material des Ski, Boards oder Bikes und verändert damit die Beschaffenheit des Materials um optimale Fahreigenschaften bei jedem Gelände und Wetter zu erreichen .
Dieser Patentanspruch umfasst die wesentlichen Komponenten und Funktionen des beschriebenen intelligenten KI-Moduls und stellt sicher, dass die einzigartige Kombination aus Sensorik und künstlicher Intelligenz geschützt wird.
